# DEMANDE DE BREVET EUROPEEN

(11) **EP 0 930 271 A2**
(43) Date de publication de la demande: **21.07.1999**
(21) Numéro de dépôt: 99102077.7
(22) Date de dépôt: 04.02.1994
(51) Int. Cl.: C01G 25/02, B01J 23/10, B01J 21/06

(54) **Compositions à base d'oxydes mixtes de zirconium et de cérium,et utilisation de ces compositions**

(30) Priorité: 10.02.1993 FR 9301450
(62) Demande divisionnaire de: 94400235.1
(71) Demandeur: RHODIA CHIMIE, 92408 Courbevoie Cédex (FR)
(72) Inventeur: Chopin, Thierry, 95320 Saint-Leu-La-Forêt (FR); Vilmin, Gabriel, 42410 Verin (FR)
(74) Mandataire: Dubruc, Philippe

(57) **Abrégé**

L'invention concerne des compositions à base d'oxydes mixtes de zirconium et de cérium présentant des surfaces spécifiques élevées et stables thermiquement, susceptibles d'être obtenues par un procédé qui comprend les étapes suivantes: (i) on mélange, dans les proportions stoechiométriques correspondant à celles de la composition finale désirée, un sol de zirconium d'une part et un sol de cérium d'autre part, le rapport r entre le diamètre moyen r1 des particules constituant le sol de zirconium et le diamètre r2 des particules constituant le sol de cérium étant d'au moins 5, (ii) on ajoute une base dans le mélange ainsi obtenu, (iii) on récupère le précipité ainsi formé et enfin (iv) on calcine le précipité ainsi récupéré. L'invention concerne l'utilisation de ces compositions en tant que, ou pour la fabrication de , catalyseurs et/ou supports de catalyseurs, en particulier dans le domaine de la post-combustion automobile.

## Description

La présente invention concerne des compositions à base d'oxydes mixtes de zirconium et de cérium à surfaces spécifiques améliorées, en particulier à surfaces spécifiques élevées et stables thermiquement, et susceptibles ainsi de convenir notamment pour des applications dans le domaine de la catalyse, et en particulier celui de la post-combustion automobile, par exemple en tant que catalyseurs mêmes et/ou comme supports de catalyseurs.

Elle concerne enfin certaines des utilisations desdites compositions.

L'oxyde de zirconium et l'oxyde de cérium apparaissent aujourd'hui comme deux constituants particulièrement importants et intéressants; ainsi, à titre d'exemple, ils sont tous deux de plus en plus fréquemment rencontrés, seuls ou conjointement, dans de nombreuses compositions pour catalyseurs dits multifonctionnels, notamment les catalyseurs destinés au traitement des gaz d'échappement des moteurs à combustion interne. Par multifonctionnnels, on entend les catalyseurs capables d'opérer non seulement l'oxydation en particulier du monoxyde de carbone et des hydrocarbures présents dans les gaz d'échappement mais également la réduction en particulier des oxydes d'azote également présents dans ces gaz (catalyseurs "trois voies"). On notera que de tels catalyseurs, tant au niveau de leurs compositions que de leur principe de fonctionnement, ont déjà été largement décrits dans la littérature et ont fait l'objet de nombreux brevets et/ou demandes de brevets.

Même si les raisons scientifiques qui ont été avancées à ce jour pour tenter d'expliquer ce fait apparaissent encore quelque peu incertaines, voire parfois contradictoires, il semble pourtant maintenant bien établi que les catalyseurs industriels "trois voies" qui contiennent à la fois de l'oxyde de zirconium et de l'oxyde de cérium sont globalement plus efficaces que les catalyseurs qui sont soit totalement exempts des deux oxydes précités, soit exempts de seulement l'un d'entre eux.

Dans des catalyseurs tels que ci-dessus, l'oxyde de zirconium et l'oxyde de cérium , qui peuvent d'ailleurs exercer une fonction catalytique propre et/ou une fonction de simple support pour d'autres éléments catalytiques tels que platine, rhodium et autres métaux précieux, sont généralement présents sous une forme non combinée, c'est à dire que l'on retrouve ces deux constituants, au niveau du catalyseur final, sous la forme d'un simple mélange physique de particules d'oxydes bien individualisées. Ceci résulte en partie du fait que ces catalyseurs à base d'oxyde de zirconium et d'oxyde de cérium sont le plus souvent obtenus par mélange intime des poudres d'oxydes correspondants, ou bien encore de précurseurs décomposables thermiquement en ces oxydes.

Or, pour diverses raisons, il se dégage aujourd'hui dans l'état de l'art une tendance de plus en plus marquée à essayer d'introduire et de mettre en oeuvre dans la composition du catalyseur les éléments zirconium et cérium non plus sous une forme séparée et non combinée, mais au contraire directement sous la forme de véritables oxydes mixtes ZrO2-CeO2 du type essentiellement, et même de préférence totalement, solutions solides.
Toutefois, dans pareille situation, et il s'agit là d'une exigence tout à fait classique dans le domaine de la catalyse, il devient alors nécessaire de pouvoir disposer d'oxydes mixtes présentant une surface spécifique qui soit la plus élevée possible et aussi, de préférence, stable thermiquement. En effet, compte tenu du fait que l'efficacité d'un catalyseur est généralement d'autant plus grande que la surface de contact entre le catalyseur (phase catalytiquement active) et les réactifs est élevée, il convient que le catalyseur, tant à l'état neuf qu'après un emploi prolongé à plus ou moins hautes températures, soit maintenu dans un état le plus divisé possible, c'est à dire que les particules solides, ou cristallites, qui le constituent restent aussi petites et aussi individualisées que possible, ce qui ne peut être obtenu qu'à partir d'oxydes mixtes présentant des surfaces spécifiques élevées et relativement stables en températures.

La présente invention vise à la satisfaction d'un tel besoin.

Plus précisément encore, la présente invention se propose ainsi de mettre à disposition de nouvelles compositions qui sont susceptibles d'être obtenues par un procédé spécifique. Ce procédé permet d'accéder de manière simple, économique et reproductible à une large gamme de compositions à base d'oxydes mixtes de type essentiellement ou totalement solutions solides dans le système ZrO2-CeO2 (par large gamme de compositions, on entend ici que les proportions entre zirconium et cérium dans les solutions solides peuvent varier dans des limites très importantes, comme indiqué ci-après), lesdites compositions présentant pour avantages principaux d'une part de posséder une grande surface spécifique, et ceci même pour des teneurs élevées en cérium, et d'autre part de conserver une surface spécifique importante même après des calcinations à des températures élevées.

A cet effet, ce procédé de synthèse convenant à la préparation de compositions à base d'oxydes mixtes de zirconium et de cérium, est caractérisé par le fait qu'il comprend les étapes essentielles suivantes :
(i) on mélange tout d'abord, dans les proportions stoechiométriques requises, un sol de zirconium d'une part et un sol de cérium d'autre part, le rapport r entre le diamètre moyen r₁ des particules constituant ledit sol de zirconium et le diamètre moyen r₂ des particules constituant ledit sol de cérium étant d'au moins 5 (r=r₁/r₂),
(ii) puis on ajoute une base dans le mélange ainsi obtenu,
(iii) on récupère ensuite le précipité ainsi formé,
(iv) et enfin on calcine le précipité ainsi récupéré,
ce par quoi l'on obtient une composition finale à base d'oxydes mixtes de zirconium et de cérium présentant des caractéristiques de surface spécifique améliorées.

Grâce au procédé selon l'invention, on peut déjà obtenir des phases de type oxydes mixtes à des températures de calcination aussi basses qu'environ 700°C. Ce procédé permet donc de mettre en oeuvre des températures de réaction si inhabituellement basses au regard de ce qui est aujourd'hui connu dans le domaine de la synthèse des solutions solides que les produits auxquels il conduit présentent alors naturellement des surfaces spécifiques suffisamment élevées pour convenir à des applications en catalyse. L'étape de calcination permet essentiellement de former les phases solutions solides, de développer la cristallinité desdites solutions solides et/ou d'ajuster leur surface spécifique à une valeur finale désirée pour une application donnée. Les phases ainsi formées se révèlent clairement au moyen d'analyses diffractométriques aux rayons X. En outre, selon l'invention, ou peut ajuster et contrôler facilement la taille des poudres finales obtenues, et ceci simplement en jouant sur la taille des sols initiaux.

Mais d'autres caractéristiques, aspects et avantages de l'invention apparaîtront encore plus complètement à la lecture de la description qui va suivre, ainsi que des divers exemples concrets, mais non limitatifs, destinés à l'illustrer.

Dans l'exposé qui suit de la présente invention, on entend par surface spécifique, la surface spécifique B.E.T déterminée par adsorption d'azote conformément à la norme ASTM D 3663-78 établie à partir de la méthode BRUNAUER - EMMETT - TELLER et décrite dans le périodique "The Journal of the American Society, 60, 309 (1938)".

Par ailleurs, chaque fois que l'expression oxyde mixte à base de zirconium et de cérium est utilisée, elle doit être entendue comme visant également une composition (ainsi que sa préparation) pouvant contenir en outre un élément dopant (stabilisant) tel que ci-après défini, en solution solide dans l'oxyde de zirconium et/ou de cérium.

En outre, les expressions sols de cérium et sols de zirconium sont ici prises dans leur sens le plus commun, c'est à dire qu'elles désignent tout système constitué de fines particules solides de dimensions colloïdales à base d'oxyde et/ou d'oxyde hydraté (hydroxyde) de cérium ou de zirconium, en suspension dans une phase liquide aqueuse, lesdites espèces pouvant en outre, éventuellement, contenir des quantités résiduelles d'ions liés ou adsorbés tels que par exemple des nitrates, des acétates ou des ammoniums. On notera que dans de tels sols, le cérium ou le zirconium peuvent se trouver soit totalement sous la forme de colloïdes, soit simultanément sous la forme d'ions et sous la forme de colloïdes, mais sans toutefois que la proportion représentée par la forme ionique n'excède 10% environ du total de l'espèce dans le sol. Selon l'invention, on met de préférence en oeuvre des sols dans lesquels le cérium et le zirconium sont totalement sous forme colloïdale.

Enfin, on indique ici que le diamètre moyen des colloïdes constituant les sols de départ doit être entendu comme désignant le diamètre hydrodynamique moyen de ces demiers, et tel que déterminé par diffusion quasi-élastique de la lumière selon la méthode décrite par Michael L. Mc CONNELL dans la revue Analytical Chemistry 53, n° 8, 1007 A, (1981). Pour des raisons liées uniquement à la simplicité et à la clarté de l'exposé, on notera que dans ce qui suit, on a utilisé également et indifféremment l'expression "taille moyenne de sol" pour désigner le diamètre hydrodynamique moyen des colloïdes constituant un sol donné.

Le procédé de synthèse des compositions selon l'invention va maintenant être développé plus en détails.

Comme indiqué précédemment, la première étape du procédé selon l'invention consiste donc à préparer un mélange entre un sol de zirconium et un sol de cérium.

Les sols de zirconium et les sols de cérium de départ mis en oeuvre selon l'invention, ainsi que leurs divers procédés de synthèse, sont bien connus de l'homme de l'art, et ont déjà été décrits dans la littérature. Certains de ces sols sont par ailleurs disponibles commercialement.

Ainsi, par exemple, des sols de zirconium peuvent être obtenus par hydrolyse à chaud d'une solution de chlorure ou de nitrate de zirconyle à une température comprise entre 140°C et 300°C, et de préférence entre 150°C et 200°C, la concentration de la solution de chlorure ou de nitrate de zirconyle étant de préférence comprise entre 0,1 et 2 mole/l exprimée en ZrO2.
Il est également possible de préparer des sols de zirconium par hydrolyse à chaud d'une solution sulfurique de zirconium, en milieu nitrique ou en milieu chlorhydrique à une température comprise entre 80 et 150°C et de préférence vers 90°C, le rapport molaire SO3/ZrO2 de la solution sulfurique de zirconium étant compris de préférence entre 0,34 et 1 et sa concentration variant de préférence de 0,1 à 2 mole/l exprimée en ZrO2. Le sulfate basique de zirconium ainsi obtenu est ensuite neutralisé par une base, de préférence l'ammoniaque, jusqu'à l'obtention d'un pH d'environ 8; puis on lave et on disperse ensuite le gel obtenu par ajout d'une solution d'acide nitrique, le pH du milieu de dispersion étant alors de préférence compris entre 0,5 et 5.

Selon la présente invention, on peut utiliser des sols de zirconium présentant une taille moyenne comprise entre 5 nm et 500 nm, et avantageusement comprise entre 10 et 200 nm.

Les sols de cérium utilisés dans l'invention peuvent, de même, être obtenus par toute technique appropriée, en particulier, mais non limitativement, selon les méthodes décrites dans les demandes de brevets FR-A- 2 583 735, FR-A- 2 583 736, FR-A- 2 583 737, FR-A- 2 596 380, FR-A- 2 596 382, FR-A- 2 621 576 et FR-A- 2 655 972 qui sont toutes au nom de la Demanderesse, et dont les enseignements sont ici totalement inclus à titre de référence.

Selon la présente invention, on peut mettre en oeuvre des sols de cérium dont la taille moyenne peut varier de 3 nm à 100 nm, de préférence entre 5 et 50 nm.

On notera que les pH initiaux, les concentrations, ainsi que l'ordre d'introduction, des sols de départ sont choisis et ajustés de manière telle que le mélange colloïdal résultant présente un caractère stable et homogène. A cet effet, des opérations d'agitation plus ou moins poussées peuvent être rendues nécessaires. En outre, les quantités de cérium et de zirconium à mettre en oeuvre et présentes dans le mélange résultant, doivent classiquement et simplement correspondre aux proportions stoechiométriques requises pour l'obtention de la composition finale désirée. Les compositions susceptibles d'être ainsi obtenues par le procédé selon l'invention sont développées plus en détails par la suite.

Selon une caractéristique essentielle du procédé selon l'invention, le rapport entre la taille moyenne du sol de zirconium et la taille moyenne du sol de cérium (étant entendu que ces deux tailles moyennes sont exprimées dans la même unité de mesure, par exemple en nanomètre) doit être supérieur ou égal à 5 environ. De préférence, ledit rapport est choisi supérieur ou égal à 10 environ, et encore plus préférentiellement d'au moins 20 environ. Il a été trouvé que les produits obtenus avec des rapports inférieurs à 5 environ, présentent des surfaces spécifiques particulièrement mauvaises et en tous cas nettement insuffisantes pour convenir pour des applications en catalyse.

Selon une variante particulièrement avantageuse de mise en oeuvre du procédé selon l'invention, on peut en outre introduire dans le mélange ci-dessus un troisième élément (ou élément dopant) qui sera choisi au sein des éléments déjà connus en soi pour stabiliser la surface spécifique des oxydes de zirconium ZrO2 et/ou des oxydes cériques CeO2, lorsque ces oxydes se présentent sous forme seule et non combinée. Il a donc été ainsi trouvé que les agents qui sont connus en eux-mêmes pour stabiliser la surface spécifique des oxydes de zirconium (zircones) et/ou des oxydes cériques pris seuls comme indiqué ci-avant permettent également, et ceci de manière inattendue et surprenante, d'améliorer de manière substantielle et significative la surface spécifique des compositions du type oxydes mixtes conformes à l'invention.

A titre d'agents stabilisants utilisables seuls ou en mélanges dans la présente invention, on peut citer notamment les éléments choisis parmi les terres rares, et en particulier l'yttrium, le lanthane, le praséodyme et le néodyme; les alcalino-terreux, en particulier le magnésium, le calcium et le baryum; l'aluminium; le silicium; le thorium; le scandium; le gallium; le bore; le titane; le vanadium; le niobium; le tantale; le chrome; le bismuth, cette liste n'étant bien entendu nullement limitative. On notera que les trois agents stabilisants que sont le lanthane, l'aluminium et le silicium conviennent ici particulièrement bien.

L'agent stabilisant est le plus souvent introduit dans le mélange sous la forme de l'un de ses sels solubles. L'introduction sous la forme d'un sol n'est pas exclue, lorsque cette dernière existe bien entendu. La quantité d'agent stabilisant à mettre en oeuvre est alors généralement telle que la teneur en élément stabilisant, exprimée sous forme oxyde, dans la composition finale soit comprise entre 0,1 et 20% en poids par rapport à l'ensemble de ladite composition.

Le mélange initial étant ainsi obtenu, on procède ensuite, conformément à la deuxième étape du procédé selon l'invention, à l'ajout d'une base dans celui-ci. Cette addition est réalisée jusqu'à précipitation totale des espèces.

La solution basique mise en oeuvre peut être notamment une solution aqueuse d'ammoniaque, de soude ou de potasse. On peut également faire appel à l'ammoniac gazeux. Selon l'invention, on utilise de préférence une solution d'ammoniaque. On notera que la base peut être également introduite dans le mélange initial directement sous une forme solide, lorsque cette demière existe et/ou qu'elle est facilement soluble en milieu aqueux.

La normalité de la solution basique mise en oeuvre n'est pas un facteur critique selon l'invention, et elle peut ainsi varier dans de larges limites, par exemple entre 0,1 et 11 N mais il est tout de même préférable de faire appel à des solutions dont la concentration varie entre 1 et 5 N.

D'une manière pratique, la quantité de base à additionner est déterminée de telle sorte que le pH final du milieu en fin de précipitation soit supérieur à 4, et de préférence supérieur ou égal à 7.

L'addition peut être effectuée en une seule fois, graduellement ou en continu, et elle est de préférence réalisée sous agitation. Cette opération peut être conduite à une température comprise entre la température ambiante (18 - 25°C) et la température de reflux du milieu réactionnel, cette demière pouvant atteindre 120°C par exemple. Elle est de préférence conduite à température ambiante.

A la fin de l'addition de la solution basique, on peut éventuellement maintenir encore le milieu de réaction sous agitation pendant quelque temps, et ceci afin de parfaire la précipitation.

A l'issue de l'étape de précipitation, on récupère une masse d'un précipité solide qui peut être séparé de son milieu par toute technique classique de séparation solide-liquide telle que par exemple filtration, décantation, essorage ou centrifugation . Compte tenu de sa simplicité, une opération de filtration est préférée.

Le produit tel que récupéré peut ensuite être soumis à des lavages, qui sont alors opérés avec de l'eau ou avec une solution d'ammoniaque, mais de préférence à l'eau. Il est à noter que l'utilisation de solvants organiques, tels que par exemple alcools, cétones, hydrocarbures et autres, pour conduire le lavage n'est pas exclue.

Pour éliminer l'eau résiduelle, le produit lavé peut enfin, éventuellement, être séché, par exemple à l'air, et ceci à une température qui peut varier entre 80 et 300°C, de préférence entre 100°C et 150°C, le séchage étant poursuivi jusqu'à l'obtention d'un poids constant.
On notera qu'il est également possible de réaliser un séchage du produit en procédant à une atomisation classique en atmosphère chaude (spray-drying) soit de la suspension telle qu'issue directement de l'étape de précipitation soit d'une suspension telle qu'obtenue par remise en suspension dans de l'eau du précipité séparé, puis éventuellement lavé, tel que mentionné ci-avant.
Dans une demière étape du procédé selon l'invention, le précipité récupéré, après éventuellement lavage et/ou séchage, doit enfin être calciné. Cette calcination est conduite jusqu'à formation complète du ou des oxydes mixtes désirés. Elle permet en outre de développer et/ou de parfaire la cristallinité des phases solutions solides formées, et elle peut être enfin ajustée en fonction de la température d'utilisation ultérieure réservée à la composition selon l'invention, et ceci en tenant compte du fait que la surface spécifique du produit est d'autant plus faible que la température de calcination mise en oeuvre est plus élevée. L'avantage de procéder à une calcination de la composition à une température supérieure à la température qui est strictement nécessaire pour obtenir sa formation et plus précisément encore au moins égale à sa future température d'utilisation est que l'on favorise ainsi la stabilisation des caractéristiques du produit final, c'est à dire en particulier que l'on vise par cette opération à limiter les risques liés à une possible évolution ultérieure du produit (notamment au niveau de sa surface spécifique) lorsque ce demier est placé dans des conditions thermiques d'utilisation plus sévères que la température de calcination subie par lui lors de sa préparation.

L'étape de calcination est généralement opérée sous air, mais une calcination menée par exemple sous gaz inerte n'est bien évidemment pas exclue.

Comme souligné ci-avant dans la description, il est possible, grâce au procédé selon l'invention, d'obtenir des solutions solides en mettant en oeuvre des températures de synthèse très basses, de l'ordre de 700°C, les solutions solides résultantes présentant alors les surfaces spécifiques les plus élevées. Il va de soi que les températures exactes auxquelles se formeront les solutions solides dépendent éminemment des compositions de ces dernières, en particulier des teneurs relatives en zirconium et en cérium et de la présence ou non d'un élément dopant, de sorte qu'il n'est pas possible d'énoncer de règle générale sur ce point.
Toutefois, dans la pratique, on observe que l'étape finale de calcination peut être convenablement mise en oeuvre avec des températures de calcination qui se limitent généralement à un intervalle de valeurs comprises entre 700°C et 1000°C, de préférence comprises entre 800°C et 1000°C.

Même après des calcinations à températures élevées, c'est à dire en particulier des températures supérieures à celles qui sont strictement nécessaires pour former et/ou mettre clairement en évidence par rayons X les solutions solides désirées, les compositions selon l'invention conservent des surfaces spécifiques tout à fait acceptables.

Les compositions susceptibles d'être obtenues grâce au procédé selon l'invention vont maintenant être développées un peu plus en détails. Ces compositions constituent un second objet de la présente invention.

Ces compositions se caractérisent avant tout par leurs surfaces spécifiques élevées, à savoir supérieures à 10 m²/g .

Avantageusement, les compositions selon l'invention présentent une surface spécifique d'au moins 20 m²/g, de préférence encore d'au moins 30 m²/g, et encore plus préférentiellement d'au moins 40 m²/g. Dans certains cas, les compositions selon l'invention peuvent même avoir des surfaces spécifiques d'au moins 50 m²/g.

En outre, selon une autre caractéristique des compositions selon l'invention, lorsque l'on soumet ces dernières à des températures de calcination relativement élevées, comme cela peut être le cas par exemple au cours de leur utilisation dans le domaine de la catalyse, notamment dans des pots d'échappement, elles continuent encore à présenter des surfaces spécifiques tout à fait convenables; ainsi, portées à 800°C, les compositions selon l'invention conservent une surface spécifique qui est encore d'au moins 20 m²/g, de préférence d'au moins 30 m^{2/}g, et encore plus préférentiellement d'au moins 40 m²/g, et lorsque ces compositions sont portées à 900°C, lesdites surfaces sont encore conservées à des valeurs d'au moins 20 m²/g, de préférence d'au moins 30 m²/g, et encore plus préférentiellement d'au moins 40 m²/g.
En d'autres termes, les compositions selon l'invention présentent, au niveau de leurs surfaces spécifiques, une très bonne stabilité thermique.

La présence des éléments cérium et zirconium (et éventuellement de l'élément dopant) au sein des compositions selon l'invention peut être mise en évidence par de simples analyses chimiques, alors que les analyses classiques en diffraction X indiquent la forme sous laquelle cette présence existe.

Ainsi, comme indiqué précédemment dans la description, les éléments susmentionnés sont présents dans les compositions selon l'invention sous une forme combinée de type essentiellement, et de préférence totalement, solutions solides ou oxydes mixtes. Les spectres en diffraction X de ces compositions révèlent en particulier, au sein de ces demières, l'existence d'une phase majoritaire clairement identifiable et correspondant à celle d'un oxyde de zirconium cristallisé dans le système cubique ou quadratique et dont les paramètres de mailles sont plus ou moins décalés par rapport à une zircone pure, traduisant ainsi l'incorporation du cérium (éventuellement de l'élément dopant) dans le réseau cristallin de l'oxyde de zirconium, et donc l'obtention d'une solution solide vraie. Aux teneurs élevées en cérium, on peut observer la présence de certaines quantités (minoritaires) d'un oxyde cérique soit non combiné soit contenant du ZrO2 en solution solide, mais dans les deux cas parfaitement noyé dans la matrice de la composition.

Exprimé sous forme d'oxydes, les compositions selon l'invention peuvent contenir globalement de 1 à 49% en poids de cérium et de 99 à 51% en poids de zirconium. De préférence, la teneur en cérium est de 1 à 30% en poids et la teneur en zirconium de 99 à 70 % en poids. Lorsque lesdites compositions contiennent en outre un agent dopant tel que signalé ci-avant, la teneur en cet élément, toujours exprimée sous forme oxyde, peut être comprise entre 0,1 et 20 % en poids, et de préférence entre 1 et 10% en poids, par rapport à l'ensemble de la composition.

On voit donc que les solutions solides à hautes surfaces spécifiques conformes à l'invention peuvent varier dans une gamme très large de composition, en restant néanmoins majoritairement à base de zirconium. La teneur limite supérieure en cérium dans la composition n'est en fait imposée que par la seule limite de solubilité de cette espèce dans l'oxyde de zirconium.

Ainsi, les surfaces spécifiques remarquablement élevées des nouvelles compositions selon l'invention font que ces dernières peuvent trouver de très nombreuses applications. Elles sont ainsi particulièrement bien adaptées pour être utilisées dans le domaine de la catalyse, comme catalyseurs et/ou comme supports de catalyseurs. Elles peuvent être employées comme catalyseurs ou supports de catalyseurs pour effectuer diverses réactions telles que, par exemple, la déshydratation, l'hydrosulfuration, l'hydrodénitrification, la désulfuration, l'hydrodésulfuration, la déshydrohalogénation, le réformage, le réformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion.

Toutefois, une des applications les plus importantes des compositions selon l'invention réside bien entendu, comme déjà souligné ci-avant dans la description, dans l'utilisation de ces dernières comme constituants pour catalyseurs destinés au traitement des gaz d'échappement des moteurs à combustion interne. Plus particulièrement encore, les compositions selon l'invention conviennent particulièrement bien pour la fabrication de catalyseurs destinés au traitement des gaz d'échappement des moteurs Diesel. Ainsi, dans cette application, les compositions selon l'invention sont, avant ou après leur imprégnation par des éléments catalytiquement actifs, tels que des métaux précieux, mises en forme pour former des catalyseurs, par exemple sous forme de billes, soit utilisées pour former un revêtement d'un corps réfractaire tel qu'un monolithe en céramique ou métallique, ce revêtement étant bien connu dans l'état de l'art sous le terme de "wash-coat".

Les exemples qui suivent illustrent l'invention sans toutefois la limiter.

### Exemple 1

De manière à obtenir un oxyde mixte final de composition pondérale suivante : 70% ZrO2 - 30% CeO2, on mélange d'une part 7500 g d'un sol de cérium (préparé selon l'enseignement de la demande de brevet FR-A- 2 583 736) contenant 180 g de CeO2 et présentant une taille moyenne de colloïdes d'environ 5 nm, avec d'autre part 2100 g d'un sol de zirconium à 20% en poids de ZrO2 et présentant une taille moyenne de colloïdes de 100 nm (r = 20).

Dans le mélange ainsi obtenu, on introduit, sous forte agitation, 450 g d'une solution d'ammoniaque 2 M. Le pH final du milieu de précipitation est alors de 7,5 environ. Le précipité ainsi formé est récupéré par filtration, puis lavé à l'eau et enfin séché à 120°C pendant 16 heures dans une étuve.

Après calcinations sous air à différentes températures, les surfaces spécifiques BET des produits obtenus sont les suivantes :
- 6 heures à 600°C : 76 m²/g
- 3 heures à 800°C : 34 m²/g
- 6 heures à 900°C : 25 m²/g

Sur le produit calciné à 900°C, on observe, par analyse du spectre de diffraction aux rayons X, la présence des solutions solides suivantes :
- une première phase solution solide constituée de CeO2 (5% en poids environ) dans du ZrO2; la taille moyenne des cristallites dans cette solution solide est de l'ordre de 10 nm.
- une deuxième phase solution solide constituée de ZrO2 (40% en poids environ) dans du CeO2; la taille des cristallites est de l'ordre de 9 nm.

Par ailleurs, on a mesuré, selon le test donné ci-dessous, la Capacité de Stockage d'Oxygène (OSC) du produit obtenu après calcination à 1000°C. La valeur trouvée est alors de 3,8 ml CO / g CeO2.

### Test de détermination des capacités de stockage d'oxygène:

Une masse de 0,3 g du produit calciné à 1000°C est soumise à un flux de gaz constitué d'hélium sous 2 bar et selon un débit de 10 l/h.
Dans ce gaz porteur sont injectés sous forme de pulse soit de l'oxyde de carbone (CO) à une concentration de 5%, soit de l'oxygène à une concentration de 2,5%. On effectue le test selon la séquence suivante :
- montée en température à 400°C sous hélium
- envoi d'une série de pulses d'oxygène
- envoi d'une série de pulses de CO
- envoi d'une nouvelle série de pulses de O₂
- envoi en alternance de pulses de CO et de O₂

Pour déterminer et apprécier la capacité de stockage, on mesure alors la consommation moyenne de CO (en ml) ramenée par gramme de CeO2 lors de la demière série constituée par les pulses altemés de CO et O₂.
On notera que pour exprimer la capacité de stockage d'oxygène en ml O2 / g CeO2, il suffit alors de diviser par 2 la valeur précédente exprimée en ml CO / g CeO2.

### Exemple 2

On reproduit l'exemple 1, à cette différence près que l'on utilise ici un sol de zirconium présentant une taille moyenne de colloïdes de 50 nm environ (r = 10).

Les caractéristiques du produit obtenu après calcination 6 heures à 900°C sont les suivantes :
- surface spécifique BET: 20 m2/g
- phases détectées aux rayons X :
   * une première solution solide de CeO2 (25% en poids environ) dans du ZrO2; la taille moyenne des cristallites constituant cette solution solide est de 11 nm environ
   * une deuxième solution solide de ZrO2 dans du CeO2, et constituée de cristallites de taille moyenne de 6,5 nm environ.

La capacité de stockage d'oxygène mesurée sur le produit calciné à 1000°C est de 2,8 ml CO/g CeO2.

### Exemple 3

On reproduit l'exemple 1, à cette différence près que l'on utilise ici un sol de cérium présentant une taille moyenne de colloïdes de l'ordre de 15 nm (r = 6,5).

La surface spécifique BET du produit obtenu après calcination 6 heures à 900°C est de 22 m2/g.

### Exemple 4

Cet exemple illustre l'invention dans le cadre de l'utilisation d'un agent dopant, ici l'aluminium.

On reproduit l'exemple 1, à cette différence près que l'on ajoute en outre dans le mélange un sol de bohémite à titre de dopant, de manière à obtenir une composition conforme à l'invention dopée par 15% en poids d'alumine Al2O3. La surface spécifique BET du produit obtenu après calcination 6 heures à 900°C est alors de 39 m2/g.

### Exemple 5 (comparatif)

On reproduit l'exemple 1, à cette différence près que l'on utilise ici un sol de zirconium présentant une taille moyenne de colloïdes d'environ 10 nm (r = 2).

La surface spécifique BET du produit obtenu après calcination 6 heures à 900°C n'est seulement que de 10 m2/g.

La capacité de stockage d'oxygène du produit calciné à 1000°C n'est en outre que de 1,6 ml CO/g CeO2.

### Exemple 6 (comparatif)

On reproduit l'exemple 1, à ces différences près que l'on met cette fois en oeuvre un sol de zirconium présentant un diamètre moyen de colloïdes de 50 nm environ et un sol de cérium présentant un diamètre moyen de colloïdes de l'ordre de 15 nm (r = 3,5).

La surface spécifique BET du produit obtenu après calcination 6 heures à 900°C est de 18 m2/g.

### Exemple 7 (comparatif)

On précipite à différents pH et par ajout d'hydrogénocarbonate d'ammonium une solution mixte contenant d'une part du nitrate de zirconium et, d'autre part, du nitrate de cérium (sels solubles) dans un rapport de concentrations permettant d'obtenir dans la composition finale (après calcination) le rapport massique en oxydes suivant : 80% en ZrO2 et 20% en CeO2.

Le précipité est récupéré par filtration, puis lavé et enfin séché.

Après calcination 6 heures à 900°C sous air, on obtient une surface spécifique BET de 10 m2/g pour les deux produits qui sont issus respectivement d'une précipitation à pH de 4 et d'une précipitation à pH de 8.

## Revendications

1. Composition à base de zirconium et de cérium, caractérisée en ce qu'après calcination à une température de 700°C elle se présente sous forme d'une phase qui est une solution solide d'oxyde de cérium incorporé dans le réseau cristallin d'oxyde de zirconium.

2. Composition à base de zirconium et de cérium, caractérisée par en ce qu'elle est susceptible d'être obtenue par un procédé qui comprend les étapes suivantes :
(i) on mélange, dans des proportions stoechiométriques correspondant à celles de la composition finale désirée, un sol de zirconium d'une part et un sol de cérium d'autre part, le rapport r entre le diamètre moyen r₁ des particules constituant ledit sol de zirconium et le diamètre r₂ des particules constituant ledit sol de cérium étant d'au moins 5,
(ii) on ajoute une base dans le mélange ainsi obtenu,
(iii) on récupère le précipité ainsi formé,
et en ce qu'après calcination dudit précipité à une température de 700°C elle se présente sous forme d'une phase qui est une solution solide d'oxyde de cérium incorporé dans le réseau cristallin d'oxyde de zirconium.

3. Composition selon l'une des revendications 1 ou 2, caractérisée en ce qu'elle contient, exprimé sous forme d'oxydes, de 51 % à 99 % en poids de zirconium, et de 1 % à 49 % en poids de cérium.

4. Composition selon l'une des revendications précédentes, caractérisée en ce que la teneur en zirconium est comprise entre 70 % et 99 %, et la teneur en cérium est comprise entre 1% et 30 % en poids.

5. Composition selon l'une des revendications précédentes, caractérisée en ce qu'elles contiennent en outre de 0,1 % à 20% en poids d'un élément dopant.

6. Composition selon la revendication 5, caractérisée en ce que ladite teneur en élément dopant est comprise entre 1 % et 10% en poids.

7. Utilisation d'une composition telle que définie à l'une quelconque des revendications 1 à 6 en tant que, ou pour la fabrication de, catalyseurs ou supports de catalyseurs.

8. Catalyseurs du type comprenant un support poreux et des éléments catalytiquement actifs, caractérisés en ce que ledit support poreux comprend, éventuellement en mélange avec de l'alumine, au moins une composition telle que définie à l'une quelconque des revendications 1 à 6.

9. Catalyseurs de type monolithe comprenant une structure réfractaire (support) revêtue par une couche poreuse (wash-coat) sur laquelle sont déposés des éléments catalytiquement actifs, caractérisés en ce que ladite couche poreuse comprend, éventuellement en mélange avec de l'alumine, au moins une composition telle que définie à l'une quelconque des revendications 1 à 6.

10. Utilisation de catalyseurs tels que définis à l'une des revendications 8 ou 9, pour le traitement des gaz d'échappement des moteurs à combustion interne, en particulier des moteurs d'automobiles.
